# EUROPEAN PATENT SPECIFICATION

(11) **EP 3 492 899 B1**
(45) Date of publication and mention of the grant of the patent: **29.09.2021**
(21) Application number: 18206070.7
(22) Date of filing: 13.11.2018
(51) Int. Cl.: G01M 17/013, G01B 5/252, G01B 5/20, G01B 21/12, G01B 5/00

(54) **DEVICE FOR DETECTING RUNOUT OF A WHEEL RIM**
VORRICHTUNG ZUR ERFASSUNG DES RUNDLAUFS EINER RADFELGE
DISPOSITIF DE DÉTECTION DU FAUX-ROND D'UNE JANTE DE ROUE

(30) Priority: 30.11.2017 CN 201711235338
(43) Date of publication of application: 05.06.2019
(73) Proprietor: CITIC Dicastal Co., Ltd, Qinhuangdao Heibei 066011 (CN)
(72) Inventor: LIU, Weidong, Qinhuangdao, Heibei 066011 (CN); LIU, Fengyan, Qinhuangdao, Heibei 066011 (CN); CHANG, Haiping, Qinhuangdao, Heibei 066011 (CN)
(74) Representative: Gong, Jinping

(56) References cited:
- CN-A- 104 057 276
- CN-A- 105 928 476
- CN-A- 107 309 462
- CN-A- 107 309 709

## Description

### Field of the Invention

The present invention relates to a detection device, specifically to a device for detecting runout of a wheel bead seat on line after a wheel is machined.

### Background of the Invention

In the machining of an automobile wheel, the runout amount of the wheel is an important factor affecting the life and safety of the wheel. Therefore, the runout of the wheel requires 100% detection. The wheel hub manufacturer usually uses manual operation semi-automatic runout detection equipment for detection. Such detection method has the problems of low efficiency, high labor cost, poor universality and the like. The present invention provides a device for detecting runout of a wheel on line.

CN 105 928 476 A, CN 107 309 709 A, CN 107 309 462 A and CN 104 057 276 A of the applicant relate to devices for the automated monitoring and/or processing of wheels.

Specifically, CN 105 928 476 A provides a wheel runout detecting device, CN 107 309 709A discloses a device for monitoring the thickness of valve holes online, CN 107 309 462 A relates to a device for online drilling, and CN 104 057 276 A discloses an on-line air valve pulling device. CN 105 928 476 A relates to an automated testing station device for measuring the radial runout of a wheel rim having a support frame, a pneumatic cylinder and an electric motor. Wheel rims are delivered to the working position of the automated testing station via a conveyor system having rolling elements. The wheel is driven by a shaft having an expanding core end piece, configured for engaging with an inner diameter of the wheel rim. A motor drives the shaft, and thus the wheel into rotation. The device uses a runout contact wheel-type detector which is driven by the frictional contact with the wheel rim.

### Summary of the Invention

The object of the present invention is to provide a runout detecting device.

In order to achieve the above object, the technical solution of the present invention is defined in appended claim 1.

The present invention provides a device for detecting runout of a wheel rim, having a frame and comprising a roller bed for transporting the wheel to the working position of the device, a synchronous clamping and centering mechanism for synchronously clamping and centering the wheel, a synchronous rotating mechanism for driving the wheel to rotate and a runout detection mechanism for detecting the runout amount of the bead seat of the wheel, wherein the roller bed comprises a roller bed bracket fixed on the frame, a roller is connected with the roller bed bracket via a roller bed sprocket, a roller bed motor is fixed on the roller bed bracket, and a power sprocket is mounted on the roller bed motor;
in the synchronous clamping and centering mechanism, a cylinder seat is fixed on a side of the frame, a cylinder is fixed on the frame via a cylinder flange and the cylinder seat, and an output rod of the cylinder is connected to a cylinder connecting plate; a base is fixed on the frame, a linear guide rail A is mounted on the base, and the linear guide rail A is connected with a connecting plate via a guide rail sliding seat A; a lead screw support is fixed on the frame, two lead screw caps are respectively fixed to a connecting plate on the left and right sides of the working position, and a left and right threaded lead screw is connected to the lead screw caps and the lead screw support respectively;
the synchronous rotating mechanism comprises a driving rotating portion and a driven rotating portion, which are arranged on the respective connecting plate on the left or the right side and respectively have two rotating wheels, each of the rotating wheels being provided with a rotating shaft, an end cover, a bearing and a shaft sleeve, wherein in the driving rotating portion, a rotating motor and the shaft sleeves are mounted on the respective connecting plate, the end covers are mounted on the shaft sleeves, the bearings and the rotating shafts are enclosed inside the respective shaft sleeves and the connecting plate, two rotating wheels and a synchronous pulley A or a synchronous pulley B are mounted at each of the two ends of the rotating shafts, a dynamic synchronous pulley is mounted on a rotating motor shaft, and the synchronous pulley A, the synchronous pulley B and the dynamic synchronous pulley are connected via a synchronous belt;
in the driven rotating portion, the shaft sleeves are mounted on the respective connecting plate, the end covers are mounted on the shaft sleeves, the bearings and the rotating shafts are enclosed inside the respective shaft sleeves and the connecting plate, two rotating wheels are mounted respectively at one end of the respective rotating shaft;
in the runout detection mechanism, a servo motor A and a linear guide rail A are fixed on the frame via a guide rail rack, a sliding rack is connected with a linear guide rail A via a guide rail sliding seat A, a lead screw A is connected with the servo motor A and the sliding rack respectively, and the servo motor A drives the sliding rack to move up and down along the linear guide rail A via the lead screw A;
a servo motor B and a linear guide rail B are fixed on the sliding rack, a mounting bracket is connected with the linear guide rail B via a guide rail sliding seat B, a lead screw B is connected with the servo motor B and the mounting bracket respectively, and the servo motor B drives the mounting bracket to move horizontally along the linear guide rail B via the lead screw B;
a detection wheel and a runout detector are mounted on the mounting bracket; according to the structure and size of the wheel to be detected, through the servo motor A and the servo motor B, the detection wheel in the runout detector is controlled to move within a specific plane, which specific plane is perpendicular to the axis of rotation of the wheel and can be located at a specific axial position of the wheel rim, the detection wheel is in contact with a bead seat of the wheel;
and the detection wheel is driven to rotate by the friction between the detection wheel and the bead seat of the wheel, and the runout detector detects the runout amount of the bead seat of the wheel when the wheel rotates and transmits the data to a computer processing system;
wherein for detecting the wheel rim runout, an end face of the wheel is placed on the roller bed and the wheel is transported to the working position via the roller bed, and after the wheel is centered via the synchronous clamping and centering mechanism, the synchronous rotating mechanism drives the wheel to rotate, and meanwhile, the detection wheel of the runout detection mechanism is driven to rotate by the friction between the detection wheel and the bead seat of the wheel, and once the wheel is driven to rotate one cycle, the runout detector can detect the runout amount of the bead seat of the wheel.

In actual use, a wheel is transported to the working position of the device via a roller bed, compressed air is introduced, and the cylinder drives the right driving rotating portion to move toward the middle along the linear guide rail A via the guide rail sliding seat A and the linear guide rail A. Meanwhile, the left and right threaded lead screw begins to rotate. Under the co-action of the left and right threaded lead screw and the lead screw caps on the left and right sides, the left driven rotating portion moves toward the middle along the linear guide rail A, and the four rotating wheels on the left and right rotating portions are synchronously centered toward the central position of the four rotating shafts and clamp the rim of the wheel. Thus, the wheel is synchronously clamped and centered. Then, the rotating motor drives the synchronous pulley A and the synchronous pulley B to rotate via the dynamic synchronous pulley and the synchronous belt, the rotating wheels are driven by the rotating shafts to rotate, and the rim of the wheel is in contact fit with the rotating wheels after the wheel is centered via the synchronous clamping and centering mechanism. According to the structure and size of the wheel to be detected, through the servo motor A and the servo motor B, the detection wheel in the runout detector can be controlled to move within a specific plane, and the detection wheel is in contact with the bead seat of the wheel. Next, the two synchronous rotating wheels on the right side of the synchronous rotating mechanism drive the wheel to rotate. Meanwhile, the detection wheel is driven to rotate by the friction between the detection wheel and the bead seat of the wheel, and once the wheel rotates one cycle, the runout detector can detect the runout amount of the bead seat of the wheel and transmit the data to a computer processing system. So far, the runout detection on the wheel is completed.

The invention can meet the needs of the detection of runout of the wheel rim, and has the characteristics of simple structure, easy fabrication, stable performance, satisfying procession requirements, and can adapt to the need of automatic production.

### Brief Description of the Drawings

The embodiments of the present invention will be described in detail below in combination with the accompanying drawings, in which:

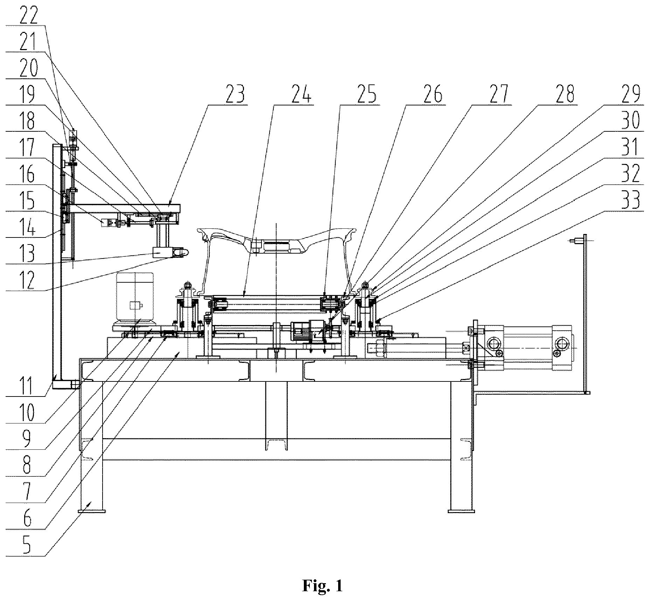

Fig. 1 is a structure diagram of a device according to the present invention.

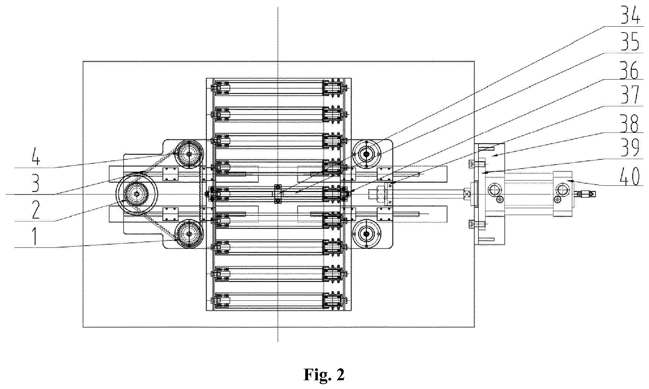

Fig. 2 is a top view of the device according to the present invention.

In which, 1-synchronous pulley A, 2-dynamic synchronous pulley, 3-synchronous belt, 4-synchronous pulley B, 5-frame, 6-base, 7-guide rail sliding seat A, 8-linear guide rail A, 9-connecting plate, 10-rotating motor, 11-guide rail rack, 12-detection wheel, 13-runout detector, 14-linear guide rail A, 15-guide rail sliding seat A, 16-servo motor B, 17-lead screw B, 18-linear guide rail B, 19-mounting bracket, 20-servo motor A, 21-guide rail sliding seat B, 22-lead screw A, 23-sliding rack, 24-roller, 25-roller bed sprocket, 26-roller bed bracket, 27-power sprocket, 28-roller bed motor, 29-rotating wheel, 30-rotating shaft, 31-end cover, 32-bearing, 33-shaft sleeve, 34-lead screw support, 35-left and right threaded lead screw, 36-lead screw cap, 37-cylinder connecting plate, 38-cylinder seat, 39-cylinder flange, 40-cylinder.

### Detailed Description of the Embodiments

The details and working conditions of the specific device according to the present invention will be described in detail below in combination with the accompanying drawings.

A runout detecting device according to the present invention is composed of a synchronous pulley A1, a dynamic synchronous pulley 2, a synchronous belt 3, a synchronous pulley B4, a frame 5, a base 6, a guide rail sliding seat A7, a linear guide rail A8, a connecting plate 9, a rotating motor 10, a guide rail rack 11, a detection wheel 12, a runout detector 13, a linear guide rail A14, a guide rail sliding seat A15, a servo motor B16, a lead screw B17, a linear guide rail B18, a mounting bracket 19, a servo motor A 20, a guide rail sliding seat B21, a lead screw A22, a sliding rack 23, a roller 24, a roller bed sprocket 25, a roller bed bracket 26, a power sprocket 27, a roller bed motor 28, rotating wheels 29, rotating shafts 30, an end cover 31, a bearing 32, a shaft sleeve 33, lead screw support 34, left and right threaded lead screw 35, lead screw cap 36, a cylinder connecting plate 37, a cylinder seat 38, a cylinder flange 39 and a cylinder 40.
I. A synchronous clamping and centering mechanism: the cylinder seat 38 is fixed on the side of the frame 5, the cylinder 40 is fixed on the frame 5 via the cylinder flange 43 and the cylinder seat 38, and an output rod of the cylinder 40 is connected to the cylinder connecting plate 37; the base 6 is fixed on the frame 5, the linear guide rail A8 is mounted on the base 6, and the linear guide rail A8 is connected with the connecting plate 9 via the guide rail sliding seat A7; the lead screw support 34 is fixed on the frame 5, the two lead screw caps 36 are respectively fixed to the connecting plate 9 on the left and right sides, and the left and right threaded lead screw 35 is connected to the lead screw caps 36 and the lead screw support 34 respectively.
   After the cylinder 40 is charged with air, an output shaft of the cylinder 40 drives a right driven rotating portion to move toward the middle along the linear guide rail A 8 via the guide rail sliding seat A7 and the linear guide rail A8. Meanwhile, the left and right threaded lead screw 35 begins to rotate. Under the co-action of the left and right threaded lead screw 35 and the lead screw caps 36 on the left and right sides, a left driving rotating portion moves toward the middle along the linear guide rail A8, and the four rotating wheels 29 on the left and right rotating portions are synchronously centered toward the central position of the four rotating shafts 30 and clamp the rim of a wheel, thus realizing synchronous clamping and centering of the wheel. The device can meet the requirements for synchronous clamping and centering of wheels having different sizes.
II. A synchronous rotating mechanism: the rotating motor 10 and the shaft sleeve 33 are mounted on the connecting plate 9, the end cover 31 is mounted on the shaft sleeve 33, the bearings 32 and the rotating shafts 30 are enclosed inside the shaft sleeve 33 and the connecting plate 9, two rotating wheels 29 and the synchronous pulley A1 or the synchronous pulley B4 are mounted at each of the two ends of the rotating shafts 30, the dynamic synchronous pulley 2 is mounted on the rotating motor shaft 10, and the synchronous pulley A1, the synchronous pulley B4 and the dynamic synchronous pulley 2 are connected via the synchronous belt 3; the roller bed bracket 26 is fixed on the frame 5, the roller 24 is connected with the roller bed bracket 26 via the roller bed sprocket 25, the roller bed motor 28 is fixed on the roller bed bracket 26, and the power sprocket 27 is mounted on the roller bed motor 28.

The rotating motor 10 drives the synchronous pulley A1 and the synchronous pulley B4 to rotate via the dynamic synchronous pulley 2 and the synchronous belt 3, the rotating wheels 29 are driven by the rotating shafts 30 to rotate, the rim of the wheel is in contact fit with the rotating wheels 29 after the wheel is centered via the synchronous clamping and centering mechanism, and the two synchronous rotating wheels 29 on the left side drive the wheel to rotate. III. A runout detecting mechanism: the servo motor A20 and the linear guide rail A14 are fixed on the frame 5 via the guide rail rack 11, the sliding rack 23 is connected with the linear guide rail A14 via the guide rail sliding seat A15, the lead screw A22 is connected with the servo motor A20 and the sliding rack 23 respectively, and the servo motor A 20 drives the sliding rack 23 to move up and down along the linear guide rail A14 via the lead screw A22.

The servo motor B 16 and the linear guide rail B18 are fixed on the sliding rack 23, the mounting bracket 19 is connected with the linear guide rail B18 via the guide rail sliding seat B21, the lead screw B17 is connected with the servo motor B16 and the mounting bracket 19 respectively, and the servo motor B16 drives the mounting bracket 19 to move horizontally along the linear guide rail B18 via the lead screw B17.

The detection wheel 12 and the runout detector 13 are mounted on the mounting bracket 19.

In actual use, a wheel is transported to the working position of the device via a roller bed, compressed air is introduced, and the cylinder 40 drives the right driving rotating portion to move toward the middle along the linear guide rail A8 via the guide rail sliding seat A7 and the linear guide rail A8. Meanwhile, the left and right threaded lead screw 35 begins to rotate. Under the co-action of the left and right threaded lead screw 35 and the lead screw caps 36 on the left and right sides, the left driven rotating portion moves toward the middle along the linear guide rail A8, and the four rotating wheels 29 on the left and right rotating portions are synchronously centered toward the central position of the four rotating shafts 30 and clamp the rim of the wheel. Thus, the wheel is synchronously clamped and centered. Then, the rotating motor 10 drives the synchronous pulley A1 and the synchronous pulley B4 to rotate via the dynamic synchronous pulley 2 and the synchronous belt 3, the rotating wheels 29 are driven by the rotating shafts 30 to rotate, and the rim of the wheel is in contact fit with the rotating wheels 29 after the wheel is centered via the synchronous clamping and centering mechanism. According to the structure and size of the wheel to be detected, through the servo motor A 20 and the servo motor B 16, the detection wheel 12 in the runout detector 13 can be controlled to move within a specific plane, and the detection wheel 12 is in contact with the bead seat of the wheel. Next, the two synchronous rotating wheels 29 on the right side of the synchronous rotating mechanism drive the wheel to rotate. Meanwhile, the detection wheel 12 is driven to rotate by the friction between the detection wheel 12 and the bead seat of the wheel, and once the wheel rotates one cycle, the runout detector 13 can detect the runout amount of the bead seat of the wheel and transmit the data to a computer processing system. So far, the runout detection on the wheel is completed.

## Claims

1. A device for detecting runout of a wheel rim, having a frame (5) and comprising a roller bed for transporting the wheel to the working position of the device, a synchronous clamping and centering mechanism for synchronously clamping and centering the wheel, a synchronous rotating mechanism for driving the wheel to rotate and a runout detection mechanism for detecting the runout amount of the bead seat of the wheel, wherein
the roller bed comprises a roller bed bracket (26) fixed on the frame (5), a roller (24) connected with the roller bed bracket (26) via a roller bed sprocket (25), a roller bed motor (28) fixed on the roller bed bracket (26), and a power sprocket (27) mounted on the roller bed motor (28);
the synchronous clamping and centering mechanism comprises a cylinder seat (38) fixed on a side of the frame (5), a cylinder (40) fixed on the frame (5) via a cylinder flange (39) and the cylinder seat (38), and an output rod of the cylinder (40) connected to a cylinder connecting plate (37); a base (6) fixed on the frame (5), a linear guide rail A(8) mounted on the base (6), and wherein
the linear guide rail A(8) is connected with a connecting plate (9) via a guide rail sliding seat A(7); a lead screw support (34) fixed on the frame (5), two lead screw caps (36) respectively fixed to a connecting plate (9) on the left and right sides of the working position, and a left and right threaded lead screw (35) connected to the lead screw caps (36) and the lead screw support (34) respectively;
the synchronous rotating mechanism comprises a driving rotating portion and a driven rotating portion, which are arranged on the respective connecting plate (9) on the left or the right side and respectively have two rotating wheels (29), each of the rotating wheels being provided with a rotating shaft (30), an end cover (31), a bearing (32) and a shaft sleeve (33), wherein in the driving rotating portion, a rotating motor (10) and the shaft sleeves (33) are mounted on the respective connecting plate (9), the end covers (31) are mounted on the shaft sleeves (33), the bearings (32) and the rotating shafts (30) are enclosed inside the respective shaft sleeves (33) and the connecting plate (9), two rotating wheels (29) and a synchronous pulley A(1) or a synchronous pulley B(4) are mounted at each of the two ends of the rotating shafts (30), a dynamic synchronous pulley (2) is mounted on a rotating motor shaft (10), and the synchronous pulley A(1), the synchronous pulley B(4) and the dynamic synchronous pulley (2) are connected via a synchronous belt (3); in the driven rotating portion, the shaft sleeves (33) are mounted on the respective connecting plate (9), the end covers (31) are mounted on the shaft sleeves (33), the bearings (32) and the rotating shafts (30) are enclosed inside the respective shaft sleeves (33) and the connecting plate (9), two rotating wheels (29) are mounted respectively at one end of the respective rotating shaft (30);
the runout detection mechanism comprises a servo motor A(20) and a linear guide rail A(14) fixed on the frame (5) via a guide rail rack (11), a sliding rack (23) connected with a linear guide rail A(14) via a guide rail sliding seat A(15), a lead screw A(22) connected with the servo motor A(20) and the sliding rack (23) respectively, and the servo motor A(20) is configured to drive the sliding rack (23) to move up and down along the linear guide rail A(14) via the lead screw A(22);
a servo motor B(16) and a linear guide rail B(18) fixed on the sliding rack (23), a mounting bracket (19) connected with the linear guide rail B(18) via a guide rail sliding seat B(21), a lead screw B(17) connected with the servo motor B(16) and the mounting bracket (19) respectively, and the servo motor B(16) is configured to drive the mounting bracket (19) to move horizontally along the linear guide rail B(18) via the lead screw B(17);
whereby a detection wheel (12) and a runout detector (13) are mounted on the mounting bracket (19);
according to the structure and size of the wheel to be detected, through the servo motor A (20) and the servo motor B (16), the detection wheel (12) in the runout detector (13) is controlled to move within a specific plane, which specific plane is perpendicular to the axis of rotation of the wheel and can be located at a specific axial position of the wheel rim, the detection wheel (12) is in contact with a bead seat of the wheel; and the detection wheel (12) is driven to rotate by the friction between the detection wheel (12) and the bead seat of the wheel, and the runout detector (13) detects the runout amount of the bead seat of the wheel when the wheel rotates and transmits the data to a computer processing system;
wherein for detecting the wheel rim runout, an end face of the wheel is placed on the roller bed and the wheel is transported to the working position via the roller bed, and after the wheel is centered via the synchronous clamping and centering mechanism, the synchronous rotating mechanism drives the wheel to rotate, and meanwhile, the detection wheel (12) of the runout detection mechanism is driven to rotate by the friction between the detection wheel (12) and the bead seat of the wheel, and once the wheel is driven to rotate one cycle, the runout detector (13) can detect the runout amount of the bead seat of the wheel.

2. The device according to claim 1, **characterized in that** the synchronous clamping and centering mechanism is configured as following: after the cylinder (40) is charged with air, an output shaft of the cylinder (40) drives the right driven rotating portion to move toward the middle along the linear guide rail A(8) via the guide rail sliding seat A(7) and the linear guide rail A(8); meanwhile, the left and right threaded lead screw (35) begins to rotate; under the co-action of the left and right threaded lead screw (35) and the lead screw caps (36) on the left and right sides, the left driving rotating portion moves toward the middle along the linear guide rail A(8), and the four rotating wheels (29) on the left and right rotating portions are synchronously centered toward the central position of the four rotating shafts (30) and clamp the rim of a wheel, thus realizing synchronous clamping and centering of the wheel.

3. The device according to claim 1, **characterized in that** the synchronous rotating mechanism is configured as following: as the rotating motor (10) drives the synchronous pulley A(1) and the synchronous pulley B(4) to rotate via the dynamic synchronous pulley (2) and the synchronous belt (3), the rotating wheels (29) are driven by the rotating shafts (30) to rotate, the rim of the wheel is in contact fit with the rotating wheels (29) after the wheel is centered via the synchronous clamping and centering mechanism, and the two synchronous rotating wheels (29) on the left side drive the wheel to rotate.

## Patentansprüche

1. Vorrichtung zur Erfassung des Rundlaufs einer Radfelge, mit einem Rahmen (5) und umfassend ein Rollenbett zum Transportieren des Rades in die Arbeitsposition der Vorrichtung, einen Synchronspann- und Zentriermechanismus zum synchronen Spannen und Zentrieren des Rades, einen Synchrondrehmechanismus zum Antreiben des Rads zum Drehen und ein Rundlauferfassungsmechanismus zum Erfassen des Rundlaufwerts des Wulstsitzes des Rads,
wobei das Rollenbett eine am Rahmen (5) befestigte Rollenbetthalterung (26), eine mit der Rollenbetthalterung (26) über ein Rollenbettkettenrad (25) verbundene Rolle (24), einen an der Rollenbetthalterung (26) befestigten Rollenbettmotor (28) und ein an dem Rollenbettmotor (28) angebrachtes Antriebskettenrad (27) umfasst;
wobei der Synchronspann- und Zentriermechanismus einen an einer Seite des Rahmens (5) befestigten Zylindersitz (38), einen über einen Zylinderflansch (39) und den Zylindersitz (38) am Rahmen (5) befestigten Zylinder (40) und eine mit einer Zylinderverbindungsplatte (37) verbunde Ausgangsstange des Zylinders (40), eine am Rahmen (5) befestigte Basis (6) und eine auf der Basis (6) montierte Linearführungsschiene A (8) umfasst; und wobei die Linearführungsschiene A (8) mit einer Verbindungsplatte (9) über einen Führungsschienen-Schiebesitz A (7) verbunden ist, mit einem am Rahmen (5) befestigten Leitspindelträger (34), zwei jeweils an einer Verbindungsplatte (9) auf der linken und rechten Seite der Arbeitsposition befestigten Leitspindelkappen (36), und einer linken und rechten mit den Leitspindelkappen (36) und dem Leitspindelträger (34) verbunden Gewindespindel (35);
wobei der Synchrondrehmechanismus einen antreibenden Drehabschnitt und einen angetriebenen Drehabschnitt umfasst, die auf der jeweiligen Verbindungsplatte (9) auf der linken oder der rechten Seite angeordnet sind und jeweils zwei Drehräder (29) aufweisen, wobei jedes der Drehräder mit einer Drehwelle (30), einem Abschlussdeckel (31), einem Lager (32) und einer Wellenhülse (33) versehen ist, wobei in dem antreibenden Drehabschnitt ein Drehmotor (10) und die Wellenhülsen (33) auf der jeweiligen Verbindungsplatte (9) montiert sind, die Abschlussdeckel (31) auf den Wellenhülsen (33) montiert sind, die Lager (32) und die Drehwellen (30) innerhalb der jeweiligen Wellenhülsen (33) und der Verbindungsplatte (9) eingeschlossen sind, zwei Drehräder (29) und eine Synchronriemenscheibe A (1) oder eine Synchronriemenscheibe B (4) an jedem der beiden Enden der Drehwellen (30) montiert sind, eine dynamische Synchronriemenscheibe (2) auf einer rotierenden Motorwelle (10) montiert ist, und die Synchronriemenscheibe A (1), die Synchronriemenscheibe B (4) und die dynamische Synchronriemenscheibe (2) über einen Synchronriemen (3) verbunden sind; in dem angetriebenen Drehabschnitt die Wellenhülsen (33) auf der jeweiligen Anschlussplatte (9) montiert sind, die Abschlussdeckel (31) auf den Wellenhülsen (33) montiert sind, die Lager (32) und die Drehwellen (30) innerhalb der jeweiligen Wellenhülsen (33) und der Verbindungsplatte (9) eingeschlossen sind, und zwei Drehräder (29) jeweils an einem Ende der jeweiligen Drehwelle (30) angebracht sind;
wobei der Rundlauferfassungsmechanismus die Folgenden umfasst: einen Servomotor A (20) und eine Linearführungsschiene A (14), die am Rahmen (5) über eine Führungsschienenhalterung (11) befestigt sind, eine Gleithalterung (23), die mit einer Linearführungsschiene A (14) über einen Führungsschienen-Schiebesitz A (15) verbunden ist, und eine Leitspindel A (22), die mit dem Servomotor A (20) bzw. der Gleithalterung (23) verbunden ist, wobei der Servomotor A (20) zum Antreiben der Gleithalterung (23) über die Leitspindel A (22) konfiguriert ist, um die entlang der Linearführungsschiene A (14) auf und ab zu bewegen;
ein Servomotor B (16) und eine Linearführungsschiene B (18), die an der Gleithalterung (23) befestigt ist, eine Montagehalterung (19), die mit der Linearführungsschiene B (18) über einen Führungsschienen-Schiebesitz B (21) verbunden ist, eine Leitspindel B (17), die mit dem Servomotor B (16) bzw. der Montagehalterung (19) verbunden ist, wobei der Servomotor B (16) ist so konfiguriert, dass er die Montagehalterung (19) über die Leitspindel B (17) antreibt, um die horizontal entlang der Linearführungsschiene B (18) zu bewegen;
wodurch
ein Erfassungsrad (12) und ein Rundlaufschlagsdetektor (13) an der Montagehalterung (19) montiert sind; je nach Aufbau und Größe des zu erfassenden Rades, wird das Erfassungsrad (12) im Rundlaufschlagsdetektor (13) durch den Servomotor A (20) und den Servomotor B (16) so gesteuert, dass es sich innerhalb einer bestimmten Ebene bewegt, welche bestimmte Ebene senkrecht zur Drehachse des Rades ist und an einer bestimmten axialen Position der Radfelge angeordnet werden kann, wobei das Erfassungsrad (12) in Kontakt mit einem Wulstsitz des Rades steht; und wobei das Erfassungsrad (12) durch die Reibung zwischen dem Erfassungsrad (12) und dem Wulstsitz des Rades zum Drehen angetrieben wird, und dabei der Rundlaufschlagsdetektor (13) den Rundlaufwert des Wulstsitzes des Rades erfasst, wenn das Rad dreht, und die Daten an ein Computerverarbeitungssystem überträgt; wobei zum Erfassen des Rundlaufs der Radfelge das Rad auf das Rollenbett aufgesetzt und über das Rollenbett in die Arbeitsposition transportiert wird, und nach Zentrieren des Rades durch den Synchronspann- und Zentriermechanismus treibt der Synchrondrehmechanismus das Rad zum Drehen an, und währenddessen wird das Erfassungsrad (12) des Rundlauferfassungsmechanismus durch die Reibung zwischen dem Erfassungsrad (12) und dem Wulstsitz des Rads angetrieben, um sich zu drehen, und sobald das Rad angetrieben wird, um einen Zyklus zu drehen, kann der Rundlaufschlagsdetektor (13) den Rundlaufwert des Wulstsitzes des Rades erfassen.

2. Vorrichtung nach Anspruch 1, **dadurch gekennzeichnet, dass** der Synchronspann- und Zentriermechanismus wie folgt ausgestaltet ist: nach dem Befüllen des Zylinders (40) mit Luft treibt eine Abtriebswelle des Zylinders (40) durch den Führungsschienen-Schiebesitz A (7) und die Linearführungsschiene A (8) den rechten angetriebenen Drehabschnitt an, um den entlang der Linearführungsschiene A (8) zur Mitte hin zu bewegen; währenddessen beginnt sich die linke und rechte Gewindespindel (35) zu drehen; wobei sich unter dem Zusammenwirken der linken und rechten Gewindespindel (35) und der Spindelkappen (36) auf der linken und rechten Seite der linke antreibende Drehabschnitt entlang der Linearführungsschiene A (8) zur Mitte hin bewegt, und wobei die vier Drehräder (29) an den linken und rechten Drehabschnitten synchron in Richtung der Mittelposition der vier Drehwellen (30) zentriert sind und die Felge eines Rades klemmen, wodurch ein synchrones Spannen und Zentrieren des Rades realisiert wird.

3. Vorrichtung nach Anspruch 1, **dadurch gekennzeichnet, dass** der Synchrondrehmechanismus wie folgt ausgestaltet ist: wenn der Drehmotor (10) die Synchronriemenscheibe A (1) und die Synchronriemenscheibe B (4) über die dynamische Synchronriemenscheibe (2) und den Synchronriemen (3) zum Drehen antreibt, werden die Drehräder (29) von den Drehwellen (30) zum Drehen angetrieben, und nachdem das Rad durch den Synchronspann- und Zentriermechanismus zentriert wird, ist die Felge des Rades in Kontakt mit den Drehräder (29), womit die zwei synchronen Drehräder (29) auf der linken Seite das Rad zum Drehen antreiben.

## Revendications

1. Dispositif de détection le faux-rond d'une jante de roue, ayant un châssis (5) et comprenant un le lit à rouleaux pour transporter la roue jusqu'à la position de travail du dispositif, un mécanisme de serrage et de centrage synchrone pour serrer et centrer de manière synchrone la roue, un mécanisme de rotation synchrone pour entraîner la roue à tourner et un mécanisme de détection de faux-rond pour détecter la valeur de faux-rond du siège de talon de la roue, dans lequel
le lit à rouleaux comprend un support de lit à rouleaux (26) fixé sur le châssis (5), un rouleau (24) relié au support de lit à rouleaux (26) via un pignon de lit à rouleaux (25), un moteur de lit à rouleaux (28) fixé sur le support de lit à rouleaux (26), et un pignon de puissance (27) monté sur le moteur de lit à rouleaux (28);
le mécanisme de serrage et de centrage synchrone comprehend un siège de cylindre (38) fixé sur un côté du châssis (5), un cylindre (40) fixé sur le châssis (5) via une bride de cylindre (39) et le siège de cylindre (38), et une tige de sortie du cylindre (40) reliée à une plaque de connexion de cylindre (37); un socle (6) fixé sur le châssis (5), un rail de guidage linéaire A(8) monté sur le socle (6), et dans lequel
le rail de guidage linéaire A(8) est relié à la plaque de connexion (9) via un siège coulissant du rail de guidage A(7); un support de vis-mère (34) fixé sur le châssis (5), deux capuchons de vis-mère (36) fixés respectivement à la plaque de connexion (9) sur les côtés gauche et droit de la position de travail, et une vis-mère filetée gauche et droite ( 35) relié respectivement aux capuchons de vis-mère (36) et au support de vis-mère (34);
le mécanisme de rotation synchrone comprend une partie rotative d'entraînement et une partie rotative entraînée, qui sont disposées sur la plaque de connexion (9) respective sur côté gauche ou droit et ont respectivement deux roues rotatives (29), chacune des roues rotatives étant pourvue d'un arbre rotatif (30), un couvercle d'extrémité (31), un palier (32) et un manchon d'arbre (33), dans lequel dans la partie rotative d'entraînement, un moteur rotatif (10) et un manchon d'arbre (33) sont montés sur la plaque de connexion (9) respective, les couvercles d'extrémité (31) sont montés sur la manchon d'arbre (33), les paliers (32) et les arbres rotatifs (30) sont enfermés à l'intérieur de la manchon d'arbre (33) respective et de la plaque de connexion (9), deux des roues rotatives (29) et une poulie synchrone A(1) ou une poulie synchrone B(4) sont montées à chacune des deux extrémités des arbres rotatifs (30), une poulie synchrone dynamique (2) est montée sur un arbre moteur rotatif (10), et la poulie synchrone A(1), la poulie synchrone B(4) et la poulie synchrone dynamique (2) sont reliées via la courroie synchrone (3); dans la partie rotative entraînée, les manchons d'arbre (33) sont montées sur la plaque de connexion (9) respective, les couvercles d'extrémité (31) sont montés sur les manchons d'arbre (33), les paliers (32) et les arbres rotatifs (30) sont enfermés à l'intérieur des manchons d'arbre (33) respectives et de la plaque de connexion (9), deux roues rotatives (29) sont montées respectivement à une extrémité de l'arbre rotatif (30) respectif ;
le mécanisme de détection de faux-rond comprehend un servomoteur A(20) et un rail de guidage linéaire A(14) fixés sur le châssis (5) via une crémaillère de rail de guidage (11), une crémaillère coulissante (23) reliée au rail de guidage linéaire A(14) via un siège coulissant de rail de guidage A(15), une vis-mère A(22) reliée au servomoteur A(20) et à la crémaillère coulissante (23) respectivement, et le servomoteur A(20) est configuré pour entraîner la crémaillère coulissante (23) pour monter et descendre le long du rail de guidage linéaire A(14 ) via la vis-mère A(22);
un servomoteur B(16) et un rail de guidage linéaire B(18) fixés sur la crémaillère coulissante (23), un support de montage (19) relié au rail de guidage linéaire B(18) via un siège coulissant du rail de guidage B(21), une vis-mère B(17) respectivement relié au servomoteur B(16) et au support de montage (19), et le servomoteur B(16) est configuré pour entraîner le support de montage (19) pour se déplacer horizontalement le long du rail de guidage linéaire B(18) via la vis mère B (17);
par lequel
une roue de détection (12) et un détecteur de faux-rond (13) sont montés sur le support de montage (19); selon la structure et la taille de la roue à détecter, par l'intermédiaire du servomoteur A(20) et le servomoteur B(16), la roue de détection (12) dans le détecteur de faux-rond (13) est commandée pour se déplacer dans un plan spécifique, quel plan spécifique est perpendiculaire à l'axe de rotation de la roue et peut être situé à une position axiale spécifique de la jante de la roue, la roue de détection (12) est en contact avec un siège de talon de la roue; et la roue de détection (12) est entraînée à tourner par le frottement entre la roue de détection (12) et le siège de talon de la roue, et le détecteur de faux-rond (13) détecte la valeur de faux-rond du siège de talon de la roue lorsque la roue tourne et transmet les données à un système de traitement informatique,
dans lequel pour détecter le faux-rond de la jante de la roue, une face d'extrémité de la roue est placée sur le lit à rouleaux et la roue est transportée à la position de travail via le lit à rouleaux, et après que la roue est centrée via le mécanisme de serrage et de centrage synchrone, le mécanisme de rotation synchrone entraîne la roue à tourner, et pendant ce temps, la roue de détection (12) du mécanisme de détection de faux-rond est entraînée à tourner par le frottement entre la roue de détection (12) et le siège de talon de la roue, et une fois que la roue est entraînée à tourner d'un cycle, le détecteur de faux-rond (13) peut détecter la valeur de faux-rond du siège de talon de la roue.

2. Dispositif selon la revendication 1, **caractérisé en ce que** le mécanisme de serrage et de centrage synchrone est configuré comme suit: après que le cylindre (40) est chargé d'air, un arbre de sortie du cylindre (40) entraîne la partie rotative entraînée droite se déplacer vers le milieu le long du rail de guidage linéaire A(8) via le siège coulissant du rail de guidage A(7) et le rail de guidage linéaire A(8); pendant ce temps, les vis-mères filetées gauche et droite (35) commencent à tourner; sous la coopération des vis-mères filetées gauche et droite (35) et des capuchons de vis-mère (36) sur les côtés gauche et droit, une partie rotative d'entraînement gauche se déplace vers le milieu le long du rail de guidage linéaire A(8), et les quatre roues rotatives (29) sur les parties rotative gauche et droite sont centrées de manière synchrone vers les positions centrales des quatre arbres rotatifs (30) et serrent la jante d'une roue, réalisant ainsi un serrage et un centrage synchrones de la roue.

3. Dispositif selon la revendication 1, **caractérisé en ce que** le mécanisme de rotation synchrone est configuré comme suit: lorsque le moteur rotatif (10) entraîne la poulie synchrone A(1) et la poulie synchrone B(4) à tourner via le poulie synchrone dynamique (2) et la courroie synchrone (3), les roues rotatives (29) sont entraînées par les arbres rotatifs (30) à tourner, la jante de la roue est ajustée en contact avec les roues rotatives (29) après que la roue est centré via le mécanisme de serrage et de centrage synchrone, et les deux roues rotatives (29) synchrones sur le côté gauche entraînent la roue à tourner .
